# EUROPÄISCHE PATENTSCHRIFT

(11) **EP 2 441 888 B1**
(45) Veröffentlichungstag und Bekanntmachung des Hinweises auf die Patenterteilung: **06.03.2019**
(21) Anmeldenummer: 11008191.6
(22) Anmeldetag: 11.10.2011
(51) Int. Cl.: E01C 23/088, B62D 15/02

(54) **Selbstfahrende Baumaschine**
Self-propelled construction vehicle
Engin automobile

(30) Priorität: 13.10.2010 DE 102010048185
(43) Veröffentlichungstag der Anmeldung: 18.04.2012
(73) Patentinhaber: Wirtgen GmbH, 53578 Windhagen (DE)
(72) Erfinder: Menzenbach, Christoph, 53577 Neustadt/Wied (DE); Von der Lippe, Jörn, 53639 Königswinter (DE); Barimani, Cyrus, Dr., 53639 Königswinter (DE); Hähn, Günter, Dr., 53639 Königswinter (DE)
(74) Vertreter: Oppermann, Frank

(56) Entgegenhaltungen:
- WO-A1-2007/031531
- WO-A1-2008/012109
- DE-A1- 10 334 613

## Beschreibung

Die Erfindung betrifft eine selbstfahrende Baumaschine, die über ein Fahrwerk mit in Arbeitsrichtung vorderen und hinteren Rädern oder Laufwerken verfügt, der von dem Fahrwerk getragen wird.

Die bekannten selbstfahrenden Baumaschinen, zu denen insbesondere die Straßenfräsmaschinen, Recycler oder Stabilisierer zählen, verfügen über eine Arbeitseinrichtung zum Durchführen der Baumaßnahme. Die Arbeitseinrichtung kann beispielsweise eine Fräseinrichtung, insbesondere eine Fräswalze sein.

Derartige Baumaschinen unterscheiden sich von den Kraftfahrzeugen, insbesondere Personenkraftwagen (PKWs), dadurch, dass die Baumaschine sowohl mit den vorderen Rädern oder Laufwerken als auch mit den hinteren Rädern oder Laufwerken gelenkt werden kann. Dabei kann die Stellung, d. h. der Lenkeinschlag der vorderen bzw. hinteren Räder oder Laufwerke gegensinnig oder gleichsinnig sein. Wenn die vorderen Räder oder Laufwerke und die hinteren Räder oder Laufwerke in entgegengesetzte Richtungen gelenkt sind, kann die Baumaschine eine enge Kurve fahren, während die Baumaschine seitlich versetzend fahren kann, wenn die vorderen und hinteren Räder oder Laufwerke in die gleiche Richtung gelenkt sind.

Die Vorgabe unterschiedlicher Lenkwinkel erlaubt dem Maschinenführer, die Baumaschine exakt im Gelände zu bewegen. Beim Zurücksetzen der Baumaschine stellt sich aber für den Maschinenführer das Problem, dass er den rückwärtigen Bereich der Baumaschine nur schwer einsehen kann. Während des normalen Arbeitseinsatzes wird die Baumaschine zwar nur in Vorwärtsrichtung betrieben, zum Verladen, Ansetzen oder Einparken muss der Maschinenführer die Baumaschine aber meist auf engem Raum zurücksetzen.

Der Maschinenführer soll sich beim Zurücksetzen von einer zweiten Person einweisen lassen. Dennoch ist das Zurücksetzen erschwert, da der Maschinenführer selbst den rückwärtigen Bereich nur bedingt einsehen kann. Es sind auch selbstfahrende Baumaschinen bekannt, die über eine Kamera an der Rückseite und einen Bildschirm auf dem Fahrstand verfügen. Zwar kann der Maschinenführer der Baumaschine dann den rückwärtigen Bereich einsehen, er kann aber auch mit einer Kamera nur schwer abschätzen, wie sich die Baumaschine beim Zurücksetzen bewegt.

Für Kraftfahrzeuge, insbesondere PKWs, sind Vorrichtungen bekannt, die den Fahrer beim Einparken des Fahrzeugs unterstützten. Derartige Vorrichtungen werden auch als Fahrerassistenzsysteme bezeichnet.

Die DE 103 34 613 A1 beschreibt eine Vorrichtung für Kraftfahrzeuge, die in Abhängigkeit von dem eingeschlagenen Lenkwinkel den Bewegungsbereich des Fahrzeugs auf einem Bildschirm anzeigt, der auch als Fahrschlauch bezeichnet wird. Ein Fahrerassistenzsystem für Zugfahrzeuge mit Anhänger ist aus der WO 2008/012109 A1 bekannt.

Die bekannten Fahrerassistenzsysteme für PKWs und LKWs sind nicht für selbstfahrende Baumaschinen geeignet, die sowohl mit den vorderen Rädern oder Laufwerken als auch mit den hinteren Rädern oder Laufwerken gelenkt werden können. Auch die Höhenverstellung mit einer Längs- und Querneigung des Maschinenrahmens stellt besondere Anforderungen an ein Fahrerassistenzsystem bei selbstfahrenden Baumaschinen.

Der Erfindung liegt die Aufgabe zugrunde, eine selbstfahrende Baumaschine anzugeben, die dem Maschinenführer das Rückwärtsfahren, insbesondere zum Verladen, Ansetzen oder Einparken der Baumaschine, erleichtert.

Die Lösung dieser Aufgabe erfolgt erfindungsgemäß mit den Merkmalen des Patentanspruchs 1. Vorteilhafte Ausführungsformen der Erfindung sind Gegenstand der Unteransprüche.

Die erfindungsgemäße selbstfahrende Baumaschine zeichnet sich durch eine Einrichtung zur Unterstützung des Maschinenführers beim Rückwärtsfahren aus, die eine Einheit zum Erfassen der Stellung der vorderen Räder oder Laufwerke und hinteren Räder oder Laufwerke und eine Recheneinheit zum Bestimmen von Daten aufweist, die mindestens eine Trajektorie der Baumaschine in Abhängigkeit von der Stellung der vorderen Räder oder Laufwerke und der hinteren Räder oder Laufwerke beschreiben. Darüber hinaus weist die Einrichtung zur Unterstützung des Maschinenführers beim Rückwärtsfahren eine Bildaufzeichnungseinheit zum Aufzeichnen eines Bildes des rückwärtigen Bereichs der Baumaschine und eine Anzeigeeinheit zur Darstellung des aufgezeichneten Bildes des rückwärtigen Bereichs der Baumaschine auf. Mit einer Bildverarbeitungseinheit wird dem auf der Anzeigeeinheit angezeigten Bild des rückwärtigen Bereichs der Baumaschine die Darstellung mindestens einer Trajektorie überlagert, mit der die Bewegung der Baumaschine im Gelände oder auf Verkehrswegen oder- flächen beschrieben wird.

Die Einrichtung zur Unterstützung des Maschinenführers beim Rückwärtsfahren berücksichtigt sowohl die Stellung der vorderen als auch hinteren Räder oder Laufwerke. Es können eine oder mehrere Trajektorien bestimmt werden, die dem Bild des rückwärtigen Bereichs der Baumaschine überlagert werden. Anhand der mindestens einen Trajektorie kann der Maschinenführer beim Rückwärtsfahren genau abschätzen, wie sich die Baumaschine in Abhängigkeit von der Stellung sowohl der vorderen als auch hinteren Räder bzw. Laufwerke um ggf. vorhandene Hindernisse bewegt.

Bei einer bevorzugten Ausführungsform verfügt die Bedieneinheit der Baumaschine sowohl über Mittel zum Vorgeben eines Lenkwinkels für die vorderen und/oder hinteren Räder oder Laufwerke als auch über Mittel zur Auswahl eines Lenkmodus aus einer Mehrzahl von Lenkmodi. Dabei wirkt die Bedieneinheit der Baumaschine derart mit der Lenkeinrichtung der Maschine zusammen, dass die Lenkeinrichtung den vorgegebenen Lenkwinkel bzw. den ausgewählten Lenkmodus einstellt. Die Recheneinheit der Einrichtung zur Unterstützung des Maschinenführers beim Rückwärtsfahren, mit der die Daten bestimmt werden, die mindestens eine Trajektorie der Baumaschine in Abhängigkeit von der Stellung der vorderen und hinteren Räder oder Laufwerke beschreiben, weist bei der bevorzugten Ausführungsform Mittel zum Berechnen von den die mindestens eine Trajektorie beschreibenden Daten nicht nur in Abhängigkeit von der Stellung der vorderen und/oder hinteren Räder oder Laufwerke, sondern auch in Abhängigkeit von dem ausgewählten Lenkmodus auf.
Bei der bevorzugten Ausführungsform kann der Maschinenführer sofort nach Vorgabe von Lenkwinkel und Lenkmodus erkennen, wie sich die Maschine beim Rückwärtsfahren verhält. Durch Verändern des Lenkwinkels einerseits und des Lenkmodus andererseits kann der Maschinenführer abschätzen, welche Auswirkungen unterschiedliche Lenkwinkel bzw. Lenkmodi haben. Dadurch ist es dem Maschinenführer möglich, beim Rückwärtsfahren nicht nur die Bewegung der Maschine besser abzuschätzen, sondern auch den optimalen Lenkwinkel bei optimalem Lenkmodus oder umgekehrt vorzugeben.
Die Mittel zum Berechnen von den die mindestens eine Trajektorie beschreibenden Daten sind erfindungsgemäß derart ausgebildet, dass die Daten die Trajektorie bei dem ausgewählten Lenkmodus und dem vorgegebenen Lenkwinkel in einem auf das Fahrwerk der Baumaschine bezogenen Koordinatensystem beschreiben. Dieses Koordinatensystem ist vorzugsweise ein Koordinatensystem, das sich nicht verändert, wenn der Maschinenrahmen gegenüber dem Fahrwerk mit einer vorgegebenen Quer- und/oder Längsneigung in der Höhe verstellt wird.
Eine bevorzugte Ausführungsform der erfindungsgemäßen Baumaschine geht davon aus, dass die Lenkung der Baumaschine im Wesentlichen dem Ackermann-Gesetz genügt, so dass sich die Verlängerung der Achsen der Räder oder Laufwerke in einem Kurvenmittelpunkt schneiden. Wenn die Baumaschine gegensinnig gelenkt wird, lassen sich die Trajektorien durch Kreisbögen darstellen, die sich durch Start- und Endpunkt sowie einen Kurvenmittelpunkt und/oder Radius beschreiben lassen. Wenn die mindestens eine Trajektorie eine Gerade ist, was bei einer gleichsinnigen Lenkung der Fall ist, kann die Trajektorie allein durch den Start- und Endpunkt beschrieben werden. Es ist aber grundsätzlich auch möglich, die Trajektorie anders zu beschreiben, beispielsweise durch die Koordinaten einer Vielzahl von Punkten im Koordinatensystem.

Die Recheneinheit weist Mittel zum Umrechnen der die mindestens eine Trajektorie beschreibenden Daten in ein auf die Bildaufzeichnungseinheit bezogenes Koordinatensystem auf, in dem das Bild auf der Anzeigeeinheit dargestellt wird. Damit ist es möglich, für die Bildaufzeichnungseinheit ein anderes Koordinatensystem zu wählen, als das Koordinatensystem der Baumaschine. Folglich kann die Bildaufzeichnungseinheit an der Baumaschine beliebig angeordnet werden, um dem Maschinenführer ein Bild unter einem bestimmten Blickwinkel zeigen zu können.

Bei der erfindungsgemäßen Baumaschine ist der Maschinenrahmen in der Höhe und/oder Neigung verstellbar ausgebildet. Von Vorteil ist, wenn die korrekte Darstellung der mindestens einen Trajektorie in dem auf der Anzeigeeinheit angezeigten Bild des rückwärtigen Bereichs unabhängig von Höhe und/oder Neigung des Maschinenrahmens erfolgt. Daher weist die Recheneinheit Mittel zum Korrigieren der die mindestens eine Trajektorie beschreibenden Daten in dem auf die Bildaufzeichnungseinheit bezogenen Koordinatensystem auf der Grundlage einer Korrekturfunktion auf, mit der eine Veränderung der Längsneigung und/oder Querneigung und/oder Höhe der Bildaufzeichnungseinheit in Bezug auf das auf das Fahrwerk der Baumaschine bezogene Koordinatensystem berücksichtigt wird.

Eine Veränderung der Höhe und/oder Neigung des Maschinenrahmens gegenüber dem sich auf das Fahrwerk der Baumaschine bezogene Koordinatensystem führt auch zu einer Veränderung der Höhe und/oder Neigung der am Maschinenrahmen angeordneten Bildaufzeichnungseinheit. Die Mittel zum Korrigieren der die mindestens eine Trajektorie beschreibenden Daten stellen sicher, dass eine Veränderung der Höhe und/oder Neigung des Maschinenrahmens gegenüber dem sich auf das Fahrwerk der Baumaschine bezogene Koordinatensystem nicht zu einer falschen Anzeige der mindestens einen Trajektorie auf der Anzeigeeinheit führt. Die die mindestens eine Trajektorie beschreibenden Daten werden also in Abhängigkeit von der Höhe und/oder Neigung des Maschinenrahmens so transformiert, dass sie wieder zu dem Bild des rückwärtigen Bereichs passen, dass auf der Anzeigeeinheit angezeigt wird.

Da die Objektive der bekannten Kameras insbesondere in den Randbereichen verzerren, können Ungenauigkeiten bei der Darstellung der Trajektorie in Bezug auf die Darstellung des Bildes des rückwärtigen Bereichs der Baumaschine auftreten. Daher sieht eine besonders bevorzugte Ausführungsform Mittel zum Korrigieren der die mindestens eine Trajektorie beschreibenden Daten in dem auf die Bildaufzeichnungseinheit bezogenen Koordinatensystem auf der Grundlage einer Korrekturfunktion vor, mit der eine Verzerrung des mit der Bildaufzeichnungseinheit aufgezeichneten Bildes berücksichtigt wird. Bei dieser besonders bevorzugten Ausführungsform wird die mindestens eine Trajektorie so verzerrt wie das Bild des rückwärtigen Bereichs verzerrt wird. Diese besonders bevorzugte Ausführungsform kommt mit einer relativ geringen Rechenleistung aus, da nicht das Bild entzerrt zu werden braucht, sondern nur die Trajektorie verzerrt wird, um beide Darstellungen auf der Anzeigeeinheit in korrekter Beziehung zueinander zu zeigen. Es ist aber auch möglich, dass die Recheneinheit Mittel zum Korrigieren des Bildes des rückwärtigen Bereichs der Baumaschine in dem auf die Bildaufzeichnungseinheit bezogenen Koordinatensystem auf der Grundlage einer Korrekturfunktion aufweist, mit der Verzerrung des mit der Bildaufzeichnungseinheit aufgezeichneten Bilds korrigiert wird. Hierzu ist allerdings eine höhere Rechenleistung erforderlich.

Eine Trajektorie ist eine Bahn, die ein beliebiger Punkt beschreibt. Dieser Punkt kann auf der Baumaschine liegen, um genau einen Punkt der Maschine zu kennzeichnen, oder auch neben der Maschine liegen, um einen Sicherheitsabstand zu einem auf der Maschine liegenden Punkt zu kennzeichnen. Die Daten, mit denen die mindestens eine Trajektorie beschrieben werden, können unterschiedliche Daten sein. Beispielsweise kann die Trajektorie durch einen Start- und Endpunkt sowie einen Kreismittelpunkt oder einen Radius beschrieben werden. Die Wegstrecke zwischen Start- und Endpunkt kann die Fahrzeuglänge oder ein Teil der Fahrzeuglänge sein. Vorzugsweise werden mehrere Trajektorien angezeigt, wobei eine der Trajektorien die Fahrzeuglänge darstellt und die anderen Trajektorien Teile der Fahrzeuglänge darstellen.

Wenn die Trajektorien genau der Fahrzeuglänge oder Teilen der Fahrzeuglänge entsprechen, sollte der Punkt am äußersten Ende des Hecks der Maschine liegen, um dem Maschinenführer beim Rückwärtsfahren die Position des Hecks anzuzeigen. Mit einer Trajektorie kann beispielsweise auch die Bewegung eines Punktes auf der Arbeitseinrichtung der Maschine, beispielsweise der Fräseinrichtung, visualisiert werden.

Die Trajektorien können nicht nur als Linien zwischen Start- und Endpunkten, sondern auch als Punktwolken dargestellt werden, um die Bewegung der Baumaschine auf der Anzeigeeinheit zu visualisieren.

Nachfolgend wird ein Ausführungsbeispiel der Erfindung unter Bezugnahme auf die Zeichnungen näher erläutert.

Es zeigen:
- Fig. 1: eine Straßenfräsmaschine als ein Beispiel für eine selbstfahrende Baumaschine in der Seitenansicht,
- Fig. 2: ein Blockschaltbild einer Einrichtung zur Unterstützung des Maschinenführers beim Rückwärtsfahren,
- Fig. 3A: die selbstfahrende Baumaschine in stark vereinfachter schematischer Darstellung und eine Darstellung der Trajektorien in einem auf die Baumaschine bezogenen Koordinatensystem, wobei die Baumaschine geradeaus rückwärts fährt,
- Fig. 3B: die Trajektorien der Baumaschine von Fig. 3A in einem auf die Bildaufzeichnungseinheit bezogenen Koordinatensystem,
- Fig. 3C: die Trajektorien von Fig. 3B nach der Korrektur zur Berücksichtigung der Verzerrung der Bildaufzeichnungseinheit,
- Fig. 4A: die Baumaschine in stark vereinfachter schematischer Darstellung und eine Darstellung der Trajektorien in dem auf die Baumaschine bezogenen Koordinatensystem, wobei die Baumaschine in einem Lenkmodus rückwärts fährt, bei dem die Baumaschine nur mit den Hinterrädern gelenkt wird,
- Fig. 4B: die Trajektorien von Fig. 4A in dem auf die Bildaufzeichnungseinheit bezogenen Koordinatensystem,
- Fig. 4C: die Trajektorien von Fig. 4B nach der Korrektur zur Berücksichtigung der Verzerrung der Bildaufzeichnungseinheit,
- Fig. 5A: die Baumaschine in stark vereinfachter schematischer Darstellung und eine Darstellung der Trajektorien in dem auf die Baumaschine bezogenen Koordinatensystem, wobei die Baumaschine in einem Lenkmodus rückwärts fährt, bei dem Vorder- und Hinterräder gegensinnig lenken,
- Fig. 5B: die Trajektorien von Fig. 5A in dem auf die Bildaufzeichnungseinheit bezogenen Koordinatensystem,
- Fig. 5C: die Trajektorien von Fig. 5B nach der Korrektur zur Berücksichtigung der Verzerrung der Bildaufzeichnungseinheit,
- Fig. 6A: die Baumaschine in stark vereinfachter schematischer Darstellung und eine Darstellung der Trajektorien in dem auf die Baumaschine bezogenen Koordinatensystem, wobei die Baumaschine in einem Lenkmodus rückwärts fährt, bei dem Vorder- und Hinterräder gleichsinnig lenken,
- Fig. 6B: die Trajektorien von Fig. 6A in dem auf die Bildaufzeichnungseinheit bezogenen Koordinatensystem und
- Fig. 6C: die Trajektorien von Fig. 6B nach der Korrektur zur Berücksichtigung der Verzerrung der Bildaufzeichnungseinheit.

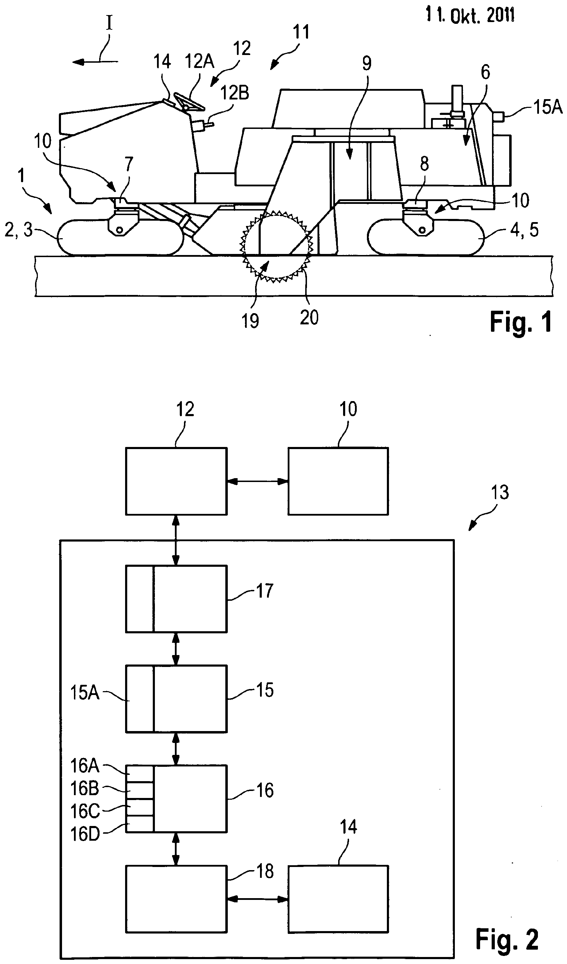

Fig. 1 zeigt eine Straßenfräsmaschine als Beispiel für eine selbstfahrende Baumaschine, die über eine Einrichtung zur Unterstützung des Maschinenführers beim Rückwärtsfahren verfügt.

Bei der Straßenfräsmaschine handelt es sich um eine sogenannte Großfräse zum Abfräsen von Straßenbelägen. Die Baumaschine weist ein Fahrwerk 1 auf, das in Arbeitsrichtung I zwei vordere Laufwerke 2, 3 und zwei hintere Laufwerke 4, 5 aufweist. Anstelle von vorderen und hinteren Laufwerken kann das Fahrwerk auch vordere und hintere Räder aufweisen. Nachfolgend werden die Laufwerke einfach als Räder bezeichnet.

Das Fahrwerk 1 trägt einen Maschinenrahmen 6, der mittels zwei vorderen und zwei hinteren Hubsäulen 7, 8 in Bezug auf das Gelände oder den Verkehrsweg oder die Verkehrsfläche in der Höhe verstellbar ist, wobei auch die Längs- und/oder Querneigung des Maschinenrahmens 6 verstellbar ist.

Die Baumaschine verfügt über eine nicht dargestellte Messeinrichtung, mit der die Stellung des Maschinenrahmens in Bezug auf eine Bezugsebene, d. h. die Höhe und Neigung des Maschinenrahmens bezüglich der Bezugsebene, erfasst wird. Eine derartige Messeinrichtung ist in der WO 2007/031531 A1 beschrieben.

Darüber hinaus verfügt die Baumaschine über eine nicht näher dargestellte Antriebseinrichtung 9 zum Antreiben der Vorder- und Hinterräder 2, 3; 4, 5 und eine Lenkeinrichtung 10 zum Lenken der Vorder- und Hinterräder 2, 3; 4, 5 sowie eine Fräseinrichtung 19 mit einer Fräswalze 20, die zwischen den Vorder- und Hinterrädern angeordnet ist.

Am Maschinenrahmen 6 ist zwischen Vorder- und Hinterrädern 2, 3; 4, 5 der Fahrstand 11 der Baumaschine angeordnet. Der Fahrerstand kann selbstverständlich auch an einer anderen Stelle angeordnet sein, so z. B. vor den Vorderrädern. An dem Fahrstand 11 befindet sich eine nur andeutungsweise dargestellte Bedieneinheit 12 für die Baumaschine.

Die Bedieneinheit 12 weist Mittel 12A zum Vorgeben eines bestimmten Lenkwinkels für die Vorder- und Hinterräder 2, 3 und Mittel 12B zur Auswahl eines bestimmten Lenkmodus auf. Bei den Mitteln 12A zum Vorgeben des Lenkwinkels kann es sich um ein Lenkrad 12A handeln, während es sich bei den Mitteln zur Auswahl des Lenkmodus um einen Wahlhebel 12B handeln kann. Lenkrad 12A und Wahlhebel 12B sind in Fig. 1 andeutungsweise dargestellt. Die Bedieneinheit 12 wirkt mit der Lenkeinrichtung 10 wie folgt zusammen.

Der Maschinenführer kann aus einer Mehrzahl von Lenkmodi mit dem Wahlhebel 12B einen bestimmten Lenkmodus auswählen. Bei einem als "coordinated steering" bezeichneten Lenkmodus wird die Baumaschine mit Vorder- und Hinterrädern 2, 3; 4, 5 gegensinnig gelenkt, wobei die Vorderräder 2 und die Hinterräder 3 in entgegengesetzte Richtungen zeigen. Der Maschinenführer wählt diesen Lenkmodus, wenn er einen engen Radius fahren will. Bei einem als "crab steering" bezeichneten Lenkmodus wird die Baumaschine mit den Vorder- und Hinterrädern 2, 3; 4, 5 gleichsinnig gelenkt, wobei die Vorderräder 2, 3 und die Hinterräder 4, 5 in die gleiche Richtung zeigen. Dieser Lenkmodus wird gewählt, wenn die Baumaschine seitlich versetzend fahren soll. Die Baumaschine kann aber auch nur mit den Vorderrädern oder nur mit den Hinterrädern gelenkt werden.

Für sämtliche Lenkmodi gilt, dass der Maschinenführer die Baumaschine nur mit dem Lenkrad 12A lenkt. Dabei werden in Abhängigkeit des Lenkmodus nur die Hinterräder, nur die Vorderräder oder sowohl die Vorder- als auch Hinterräder gelenkt, wobei dann die Vorder- und Hinterräder entweder gleichsinnig oder gegensinnig gelenkt werden. Die sich einstellenden Lenkwinkel an den Vorder- und Hinterachsen sind durch die Geometrie der Lenkeinrichtung vorgegeben, was nachfolgend noch erläutert wird.

Fig. 2 zeigt das Blockschaltbild der Einrichtung 13 zur Unterstützung des Maschinenführers beim Rückwärtsfahren, die mit der Lenkeinrichtung 10 und der Bedieneinheit 12 der Baumaschine zusammenwirkt. Die Einrichtung 13 zur Unterstützung beim Rückwärtsfahren weist eine Anzeigeeinheit 14 auf, beispielsweise ein am Bedienstand 12 angeordneter Bildschirm (Display), auf dem ein Bild des rückwärtigen Bereichs der Baumaschine zusammen mit ein oder mehreren Trajektorien angezeigt wird, mit dem der Maschinenführer abschätzen kann, wie sich die Baumaschine bei einem vorgegebenen Lenkwinkel und dem ausgewählten Lenkmodus bewegt.

Das Bild des rückwärtigen Bereichs der Baumaschine wird mit einer Bildaufzeichnungseinheit 15 aufgezeichnet, die eine am rückwärtigen Bereich des Maschinenrahmens angeordnete Kamera 15A aufweist. Die Kamera 15A folgt in Bezug auf Höhe und Neigung gegenüber dem Gelände den Bewegungen des Maschinenrahmens 6 der Baumaschine. Vorzugsweise befindet sich die Kamera 15A am Heck der Maschine.

Die Einrichtung 13 zur Unterstützung beim Rückwärtsfahren weist eine Recheneinheit 16 auf, mit der die Daten bestimmt werden, die mindestens eine Trajektorie der Baumaschine in Abhängigkeit von der Stellung der Vorder- und Hinterräder und in Abhängigkeit von dem Lenkmodus beschreiben. Die Stellung der Vorder- und Hinterräder wird mit einer Einheit 17 erfasst, die Teil der Einrichtung 13 zur Unterstützung beim Rückwärtsfahren oder Teil der Lenkeinrichtung 10 sein kann. Das Blockschaltbild von Fig. 2 zeigt die Einheit 17 als Teil der Einrichtung 13.

Darüber hinaus weist die Einrichtung 13 zur Unterstützung des Maschinenführers eine Bildverarbeitungseinheit 18 auf, die dem auf der Anzeigeeinheit 14 angezeigten Bild des rückwärtigen Bereichs der Baumaschine die mindestens eine Trajektorie überlagert, die von der Recheneinheit 16 bestimmt wird. Folglich sieht der Maschinenführer sowohl die mindestens eine Trajektorie als auch den rückwärtigen Bereich der Baumaschine auf der Anzeigeeinheit, so dass der Maschinenführer die Bewegung der Baumaschine den Objekten zuordnen kann, die sich im Gelände oder auf dem Verkehrsweg befinden. Über die mindestens eine Trajektorie hinaus können auch weitere Informationen dargestellt werden, wie z. B. die Entfernungen.

Nachfolgend wird Aufbau und Funktionsweise der einzelnen Komponenten der Einrichtung 13 zur Unterstützung des Maschinenführers beim Rückwärtsfahren für die einzelnen Lenkmodi näher erläutert.

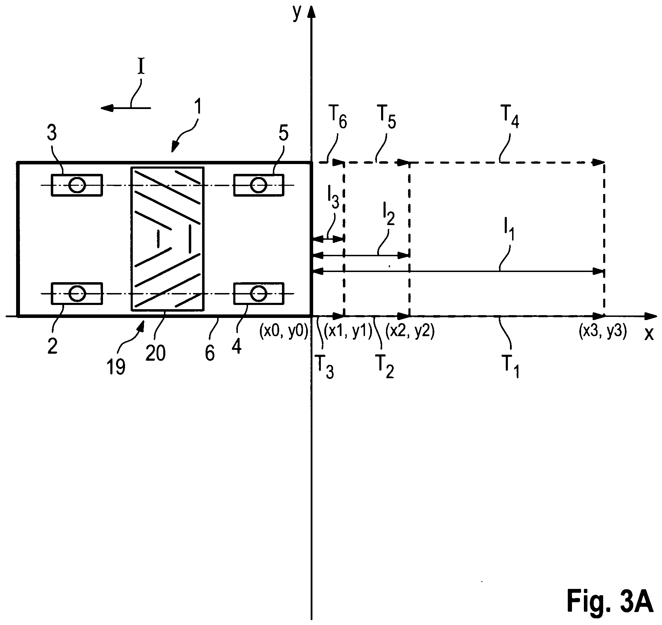

Die Figuren 3A bis 3C zeigen den einfachsten Fall, bei dem die Baumaschine geradeaus rückwärts fährt. Folglich sind die Lenkwinkel α der Vorder- und Hinterräder 2, 3; 4, 5 null. In Fig. 3A ist das Fahrwerk 1 mit den Vorder- und Hinterrädern nur schematisch dargestellt. Die Darstellung erfolgt in einem auf das Fahrwerk der Baumaschine bezogenen Koordinatensystem (x, y), das die Bezugsebene darstellt. Die Stellung der Vorder- und Hinterräder 2, 3; 4, 5 wird durch die Lenkwinkel α definiert.

Der Maschinenrahmen 6 der Baumaschine ist in dem Koordinatensystem durch ein Rechteck dargestellt. Die Eckpunkte des Rechtecks entsprechen den vorderen und hinteren Eckpunkten der Maschine. Zwischen den Vorder- und Hinterrädern 2, 3; 4, 5 befindet sich die Fräseinrichtung 19 mit der Fräswalze 20.

Der Nullpunkt (x0, y0) in dem auf das Fahrwerk der Maschine bezogenen Koordinatensystems liegt auf dem hinteren in Arbeitsrichtung I linken Eckpunkt des Maschinenrahmen 6.

Die Recheneinheit 16 verfügt über Mittel 16A, die für die Darstellung der Rückwärtsbewegung der Baumaschine bei dem vorliegenden Ausführungsbeispiel insgesamt sechs Trajektorien berechnen, die jeweils durch einen Startpunkt und einen Endpunkt beschrieben werden. Da die Baumaschine geradeaus rückwärts fährt, sind die Trajektorien Geraden zwischen den beiden Punkten.

Zur Bestimmung der Trajektorie des in Arbeitsrichtung I hinteren linken Eckpunkts (x0, y0) der Baumaschine beim Rückwärtsfahren um einen vorgegebenen Weg, der der Länge des Maschinenrahmens entspricht, berechnet die Recheneinheit die Koordinaten (x3, y3) des Punkts in dem auf das Fahrwerk der Baumaschine bezogenen Koordinatensystem, an dem sich der hintere linke Eckpunkt des Maschinenrahmens befindet, wenn die Baumaschine um die Fahrzeuglänge (l₁), beispielsweise 9 m zurückgesetzt hat. Entsprechend berechnet die Recheneinheit die Koordinaten (x2, y2) bzw. (x1, y1), an dem sich der hintere linke Eckpunkt (x0, y0) der Baumaschine befindet, wenn die Baumaschine um eine kürzere Wegstrecke (l₂ bzw. l₃), beispielsweise 3 m bzw. 1 m, zurückgesetzt hat. Diese Berechnungen erfolgen auch für den in Arbeitsrichtung I rechten hinteren Eckpunkt des Maschinenrahmens. Daraus ergibt sich eine Darstellung von 6 Trajektorien T₁ bis T₆, die durch Pfeile gekennzeichnet sind. Die gestrichelten Verbindungslinien zwischen den Spitzen der Pfeile kennzeichnen die Position des Hecks der Baumaschine beim Zurücksetzen um die jeweilige Wegstrecke, beispielsweise 9 m, 3 m, 1 m.

Die in Fig. 3A gezeigten Trajektorien T₁ bis T₆ in dem auf das Fahrwerk der Baumaschine bezogenen Koordinatensystem entsprechen aber nicht der Darstellung in der Anzeigeeinheit 14, da die Bildaufzeichnungseinheit 15 das Bild des rückwärtigen Bereichs der Baumaschine unter einem anderen Blickwinkel aufzeichnet als der Blickwinkel, der dem auf das Fahrwerk der Baumaschine bezogenen Koordinatensystem entspricht, das die Baumaschine in der Draufsicht zeigt. Die Recheneinheit 16 verfügt daher über Mittel 16B zum Umrechnen der Daten, beispielsweise der Koordinaten (x0, y0) bis (x3, y3) in dem Koordinatensystem der Baumaschine (x, y) in ein auf die Bildaufzeichnungseinheit 15 bezogenes Koordinatensystem (x', y').

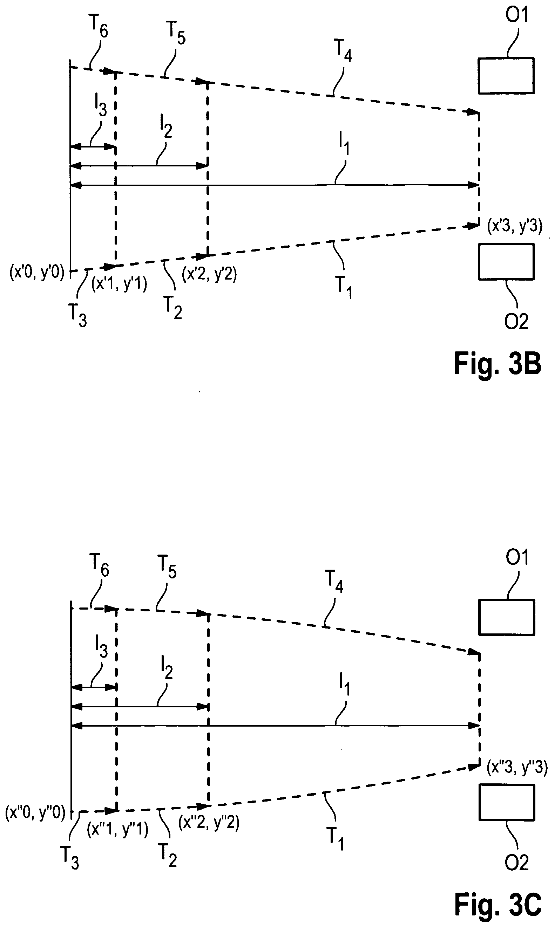

Fig. 3B zeigt die Trajektorien T₁ bis T₆ in dem Koordinatensystem der Bildaufzeichnungseinheit 15, das dem Koordinatensystem der Anzeigeeinheit 14 entspricht. Eine Änderung des Blickwinkels der Bildaufzeichnungseinheit kann also zu einer geänderten Darstellung auf der Anzeigeeinheit 14 führen. Der Blickwinkel ändert sich aber grundsätzlich nicht, da die Kamera 12A mit dem Maschinenrahmen 6 unter einem vorgegebenen Blickwinkel verbunden ist.

Das vorliegende Ausführungsbeispiel berücksichtigt auch mögliche Verzerrungen, die bei der Aufzeichnung des Bildes der Bildaufzeichnungseinheit auftreten können. Beispielsweise verzerrt das Objektiv der Kamera 15A insbesondere im Randbereich. Derartige Verzerrungen können dazu führen, dass die Objekte im Gelände oder auf den Verkehrswegen oder- flächen, die auf der Anzeigeeinheit dargestellt werden, nicht exakt den Trajektorien zugeordnet sind, die dem Bild des rückwärtigen Bereichs der Baumaschine überlagert sind.

Die Recheneinheit 16 weist Mittel 16C zum Korrigieren der die Trajektorien T₁ bis T₆ beschreibenden Daten (x0', y0') bis (x3', y3') in dem auf die Bildaufzeichnungseinheit bezogenen Koordinatensystem (x', y') auf. Die Mittel 16C korrigieren die Daten auf der Grundlage einer ersten Korrekturfunktion. Mit der ersten Korrekturfunktion werden die Daten so korrigiert, dass die Darstellung der Trajektorien T₁ bis T₆ im Wesentlichen derselben Verzerrung unterliegen wie das von der Kamera 15A aufgenommene Bild. Fig. 3C zeigt das nach der Korrektur "verzerrte Bild" der Trajektorien T₁ bis T₆ mit den Koordinaten (x0", y0") bis (x3", y3") in dem Koordinatensystem der Bildaufzeichnungseinheit 15, das dem Koordinatensystem der Anzeigeeinheit 14 entspricht.

Auf der Anzeigeeinheit 14 (Fig. 3C) wird das "verzerrte Bild" der Trajektorien T₁ bis T₆ dem mit der Bildaufzeichnungseinheit 15 aufgezeichneten Bild des rückwärtigen Bereichs der Baumaschine überlagert. Dies wird in Fig. 3 durch die Darstellung von zwei Objekten O1 und O2 verdeutlicht, die das Bild des rückwärtigen Bereichs der Baumaschine darstellen sollen. Der Maschinenführer kann auf der Anzeigeeinheit 14 sehen, dass sich die Baumaschine beim Rückwärtsfahren geradeaus auf die beiden Objekte zu bewegt, die Objekte aber nicht berührt. Er sieht, dass er die Baumaschine um eine Maschinenlänge zurücksetzen muss, um die Objekte zu erreichen.

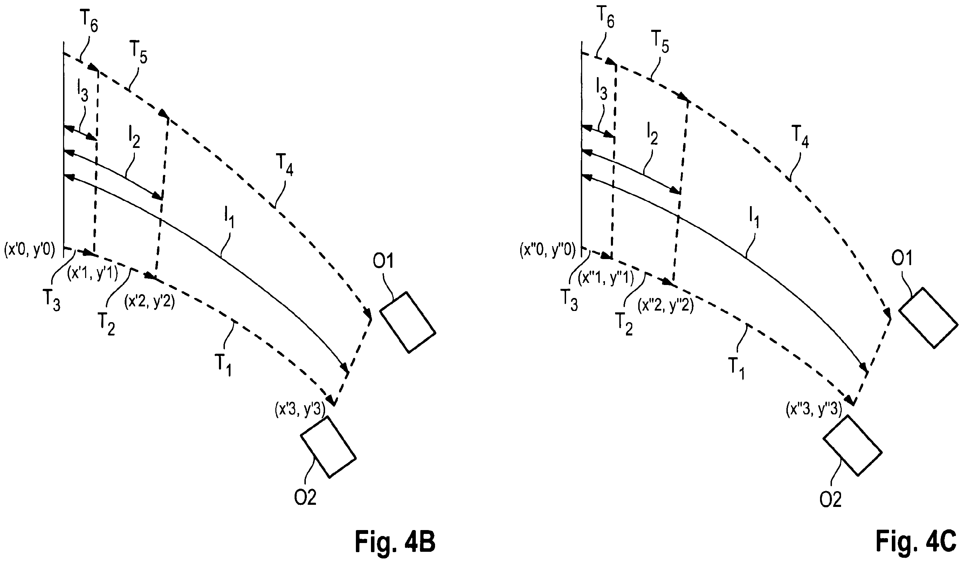

Nachfolgend wird die Bewegung der Baumaschine beim Rückwärtsfahren um eine Kurve unter Bezugnahme auf die Figuren 4B bis 4C beschrieben, wobei die Baumaschine nur mit den Hinterrädern 4, 5 gelenkt wird. Dieser Lenkmodus bedeutet, dass die Vorgabe bestimmter Lenkwinkel, die der Maschinenführer vorgibt, nur auf die Hinterräder wirkt, während der Lenkwinkel der Vorderräder den Lenkwinkel 0 behält.

Die Lenkeinrichtung 10 der Baumaschine ist derart ausgebildet, dass sie zumindest näherungsweise das Ackermann-Gesetz erfüllt. Nach dem Ackermann-Gesetz schneiden sich die Verlängerungen L₁, L₂, L₃ aller Radachsen im gemeinsamen Kurvenmittelpunkt M. Dies setzt voraus, dass der Lenkwinkel α₂ des kurvenäußeren Rades kleiner als der Lenkwinkel α₁ des kurveninneren Rades ist. Mit dem Ackermann-Gesetz ist der Radius r des Kreisbogens bestimmt, auf dem sich ein Punkt der Baumaschine bewegt. Wie bei dem ersten Ausführungsbeispiel berechnet die Recheneinheit 16 wieder die Start- und Endpunkte von 6 Trajektorien T₁ bis T₆. Da die Trajektorien nicht Geraden, sondern Kreisbögen zwischen Start- und Endpunkten sind, berechnet die Recheneinheit den Radius r oder den Mittelpunkt M der Kreisbögen, der sich aus dem Ackermann-Gesetz ergibt.

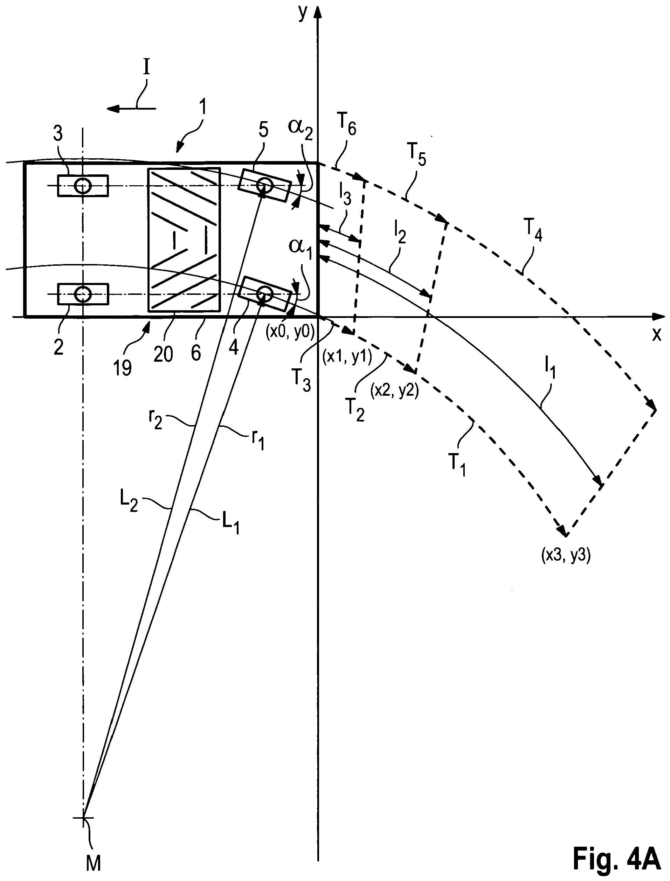

Fig. 4A zeigt die Trajektorien T₁ bis T₆ in dem Koordinatensystem (x, y) der Baumaschine. Die Trajektorien T₁ bis T₆ werden wieder in das Koordinatensystem (x', y') der Bildaufzeichnungseinheit 15 umgerechnet, die Fig. 4 B zeigt. In dem Koordinatensystem (x', y') der Bildaufzeichnungseinheit werden die Trajektorien wieder mit der ersten Korrekturfunktion korrigiert, um die Verzerrung der Bildaufzeichnungseinheit berücksichtigen zu können (Fig. 4C).

Wenn der Maschinenrahmen 6 der Baumaschine in der Höhe verstellt wird, wobei sich auch Quer- und/oder Längsneigung des Maschinenrahmens ändern können, ändert sich gleichzeitig der Blickwinkel der Kamera 12A der Bildaufzeichnungseinheit 15.

Wenn beispielsweise die vorderen Hubsäulen 7 hochgefahren und die hinteren Hubsäulen 8 runtergefahren werden, wird der Maschinenrahmen 6 vorne angehoben und hinten abgesenkt. Der Maschinenrahmen neigt sich folglich in Längsrichtung. Wenn beispielsweise die linken Hubsäulen 7, 8 hochgefahren und die rechten Hubsäulen 7, 8 runtergefahren werden, wird der Maschinenrahmen links angehoben und rechts abgesenkt. Der Maschinenrahmen 6 neigt sich folglich in Querrichtung. Längs- und Querneigung können sich auch überlagern. Da die Kamera 15A der Bildaufzeichnungseinheit 15 fest mit dem Maschinenrahmen 6 verbunden ist, folgt die Kamera den Bewegungen des Maschinenrahmens.

Eine Längs- und/oder Querneigung des Maschinenrahmens führt dazu, dass die auf der Anzeigeeinheit 14 dargestellten Trakjektorien nicht mehr zu dem in der Anzeigeeinheit dargestellten Bild des rückwärtigen Bereichs passen, dem die Trajektorien überlagert sind.

Die Recheneinheit 16 weist Mittel 16D zum Korrigieren der die mindestens eine Trajektorie beschreibenden Daten in dem auf die Bildaufzeichnungseinheit 15 bezogenen Koordinatensystem (x', y') auf der Grundlage einer zweiten Korrekturfunktion auf, mit der eine Veränderung der Längsneigung und/oder Querneigung und/oder Höhe der Kamera 12A der Bildaufzeichnungseinheit 15 in Bezug auf das auf das Fahrwerk 1 der Baumaschine bezogene Koordinatensystem (x, y) berücksichtigt wird. Dabei wird davon ausgegangen, dass die Trajektorien zuvor für den Fall berechnet worden sind, dass der Maschinenrahmen 6 in Bezug auf das Fahrwerk 1 eine vorgegebene Höhe hat und weder in Längs- noch in Querrichtung geneigt ist (Bezugsebene). Bei einer Veränderung der Höhe und/oder Neigung des Maschinenrahmen 6 werden die auf der Anzeigeeinheit 14 dargestellten Trajektorien mit der zweiten Korrekturfunktion in Abhängigkeit von der Höhe und/oder Neigung, die mit der nicht dargestellten Messeinrichtung erfasst wird, so transformiert, dass das auf der Anzeigeeinheit dargestellte Bild, beispielsweise die Objekte O1 und O2, und die Trajektorien wieder in dem richtigen Verhältnis zueinander dargestellt werden.

Wenn beispielsweise der Maschinenrahmen 6 vorne hochgefahren und hinten runtergefahren wird, dann "verkürzt" sich das rückwärtig Bild in der Anzeigeeinheit. Der Weg, den die Maschine mit einer Maschinenlänge zurücklegt, bleibt aber der gleiche. Daher werden die Trajektorien entsprechend gestreckt, was im Extremfall dazu führen kann, dass die Trajektorien nach oben aus dem Bild herauslaufen, weil der Blickwinkel der Kamera so steil ist, dass ein Bereich im Abstand einer Maschinenlänge gar nicht mehr dargestellt wird. Im umgekehrten Fall, wenn die Maschine vorne nach unten und hinten nach oben gefahren wird, verlängert sich das Bild, da die Kamera weit in die Ferne schaut. Dann werden die Trajektorien entsprechend gestaucht.

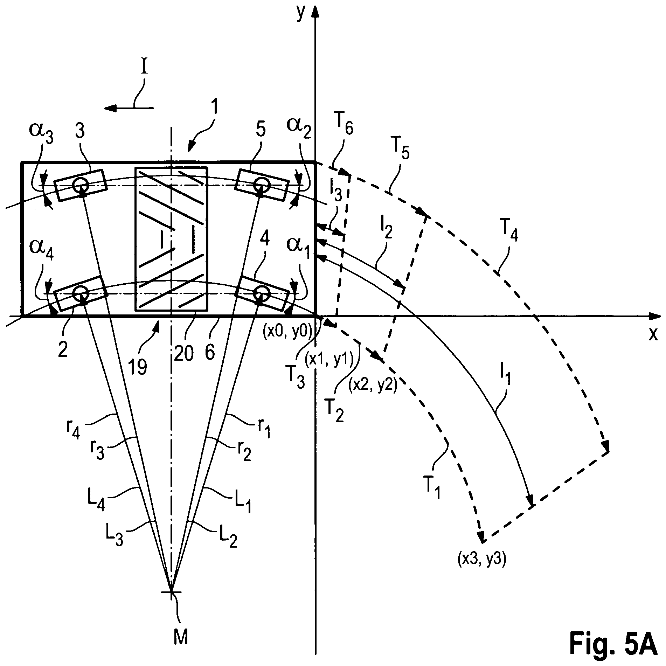

Die Figuren 5A bis 5C zeigen den Fall, dass der Maschinenführer den Lenkmodus "coordinated steering" ausgewählt und einen bestimmten Lenkwinkel vorgegeben hat. Da die Lenkeinrichtung 10 der Baumaschine näherungsweise das Ackermann-Gesetz erfüllt, ergeben sich durch die Vorgabe des Lenkwinkels die entsprechenden Stellungen der Räder. Die kurvenäußeren und kurveninneren Räder haben unterschiedliche Lenkwinkel, wobei die Lenkwinkel der kurvenäußeren Räder kleiner als die Lenkwinkel der kurveninneren Räder sind. Die Verlängerungen L₁, L₂, L₃, L₄ der Radachsen schneiden sich im Kurvenmittelpunkt M, wodurch die Radien r₁, r₂, r₃, r₄ der auf die einzelnen Radebenen bezogenen Trajektorien vorgegeben sind.

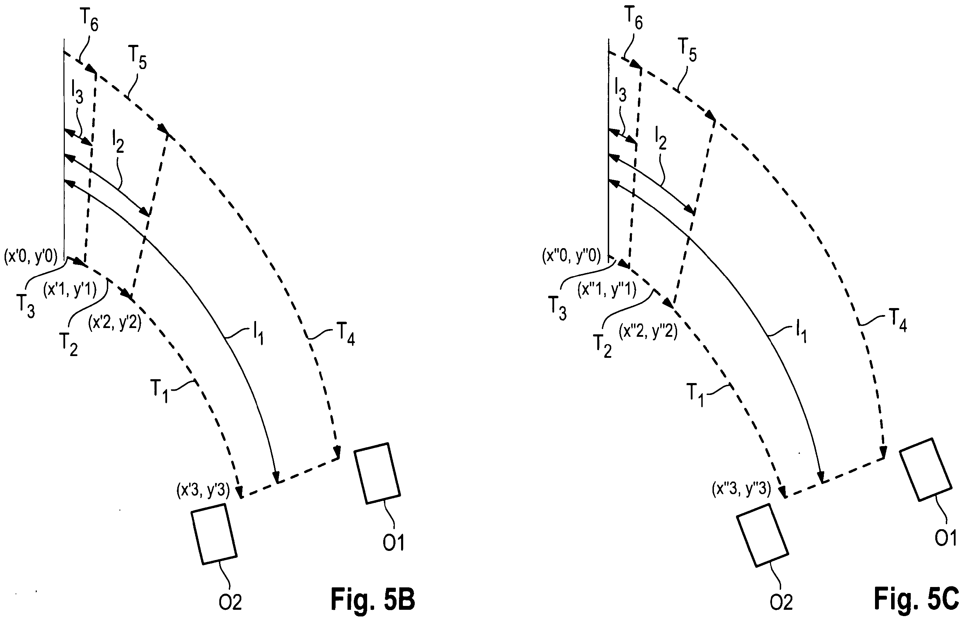

Die Recheneinheit 16 berechnet wie bei den vorausgehenden Ausführungsbeispielen in Abhängigkeit von dem ausgewählten Lenkmodus "coordinated steering" und dem eingestellten Lenkwinkel die Trajektorien T₁ bis T₆, mit denen die Bewegung der Baumaschine beschrieben wird (Fig. 5A). Die Trajektorien T₁ bis T₆ in dem Koordinatensystem (x, y) der Baumaschine (Fig. 5A) werden wieder in das Koordinatensystem (x', y') der Bildaufzeichnungseinheit 15 umgerechnet (Fig. 5B), wie zuvor beschrieben ist. Auch erfolgt wieder einer Korrektur mit der ersten und/oder zweiten Korrekturfunktion (Fig. 5C).

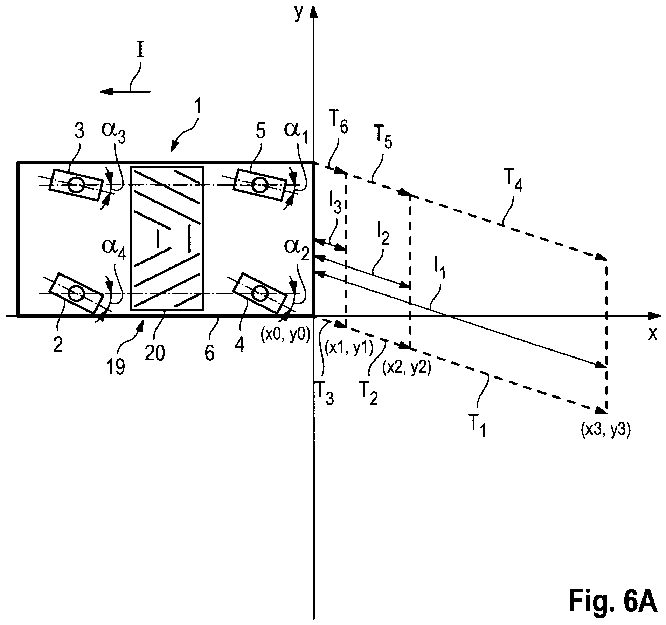

Die Figuren 6A bis 6C zeigen den Lenkmodus "crab steering". Wenn der Maschinenführer den Lenkmodus "crab steering" auswählt und einen bestimmten Lenkwinkel einstellt, verlaufen die Verlängerungen der Radachsen nicht durch einen Kurvenmittelpunkt, sondern sämtliche Achsen verlaufen im Wesentlichen parallel zueinander. Bei diesem Lenkmodus zeigen die Trajektorien in die Richtung, in die die Räder zeigen. Dabei sind die Räder auf der einen Seite bzw. die Räder auf der anderen Seite jeweils in die gleiche Richtung gerichtet. Sie haben aber nach dem Ackermann-Gesetz unterschiedliche Lenkwinkel. Der Lenkwinkel α₂ des Vorder- bzw. Hinterrads auf der einen Seite ist kleiner als der Lenkwinkel α₁ des Vorder- bzw. Hinterrads auf der anderen Seite. Dadurch bewegt sich die Baumaschine seitwärts

Die Recheneinheit 16 berechnet wieder die Trajektorien T₁ bis T₆, die durch Start- und Endpunkt bestimmt sind. Die Trajektorien sind bei dem Lenkmodus "crab steering" nicht Kreisbögen, sondern Geraden. Da die Räder auf der einen Seite einen anderen Lenkwinkel als die Räder auf der anderen Seite haben, um das Ackermann-Gesetz zu erfüllen, weichen die Richtungen der auf die einzelnen Radebenen bezogenen Trajektorien geringfügig voneinander ab. Die von der Recheneinheit bestimmten Trajektorien haben eine Richtung die zwischen den beiden Richtungen liegt, die sich aus den unterschiedlichen Lenkwinkeln für das Rad auf der einen Seite und das Rad auf der anderen Seite ergeben.

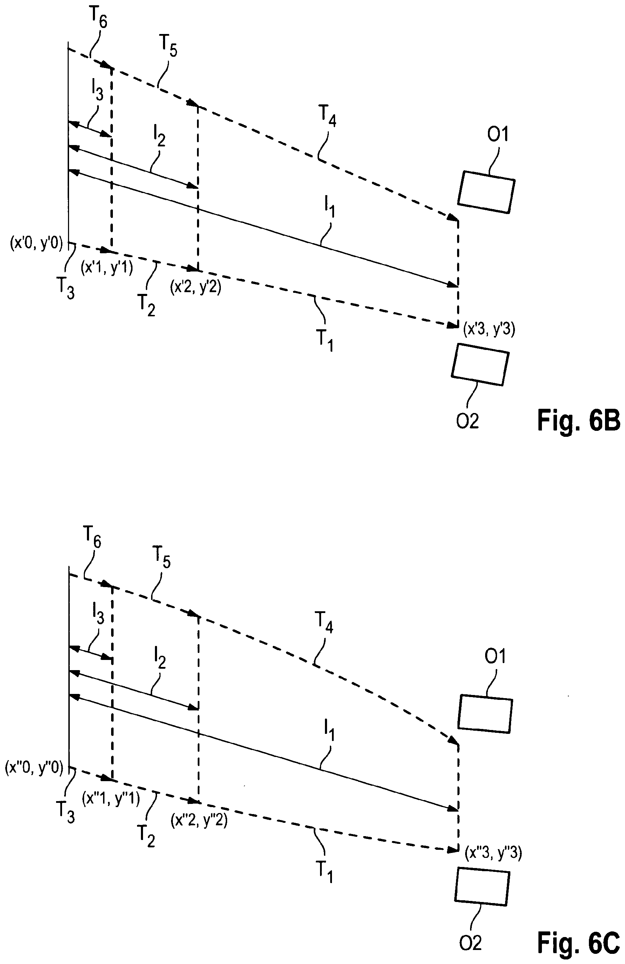

Wie bei den vorausgehenden Ausführungsbeispielen werden die Trajektorien T₁ bis T₆ wieder von dem Koordinatensystem (x, y) der Baumaschine in das Koordinatensystem (x', y') der Bildaufzeichnungseinheit umgerechnet (Fig. 6B). Auch erfolgt wieder eine Korrektur mit der ersten und zweiten Korrekturfunktion (Fig. 6C).

## Patentansprüche

1. Selbstfahrende Baumaschine mit
einem Fahrwerk (1), das in Arbeitsrichtung vordere Räder oder Laufwerke (2, 3) und hintere Räder oder Laufwerke (4, 5) aufweist,
einem Maschinenrahmen (6), der von dem Fahrwerk getragen wird,
einer Antriebseinrichtung (9) zum Antreiben der vorderen Räder oder Laufwerke und/oder der hinteren Räder oder Laufwerke (2, 3; 4, 5),
einer Lenkeinrichtung (10) zum Lenken der vorderen Räder oder Laufwerke (3, 4) und/oder der hinteren Räder oder Laufwerke (4, 5) und
einer Bedieneinheit (12),
wobei der Maschinenrahmen (6) in der Höhe und/oder Neigung verstellbar ausgebildet ist,
**dadurch gekennzeichnet, dass**
die Baumaschine eine Einrichtung (13) zur Unterstützung des Maschinenführers beim Rückwärtsfahren aufweist, wobei die Einrichtung zur Unterstützung des Maschinenführers beim Rückwärtsfahren aufweist:
eine Einheit (17) zum Erfassen der Stellung der vorderen Räder oder Laufwerke (2, 3) und/oder der hinteren Räder oder Laufwerke (4, 5),
eine Recheneinheit (16) zum Bestimmen von Daten ((xo,yo), (x1,y1), (x2,y2), (x3,y3); M, r), die mindestens eine Trajektorie (T₁ bis T₆) der Baumaschine in Abhängigkeit von der Stellung der vorderen Räder oder Laufwerke (2, 3) und/oder der hinteren Räder oder Laufwerke (4, 5) beschreiben,
eine Bildaufzeichnungseinheit (15) zum Aufzeichnen eines Bildes des rückwärtigen Bereichs der Baumaschine,
eine Anzeigeeinheit (14) zur Darstellung des aufgezeichneten Bildes des rückwärtigen Bereichs der Baumaschine und
eine Bildverarbeitungseinheit (18), die derart ausgebildet ist, dass dem auf der Anzeigeeinheit angezeigten Bild des rückwärtigen Bereichs der Baumaschine die mindestens eine Trajektorie (T₁ bis T₆) überlagert wird,
wobei die Recheneinheit (6) aufweist:
Mittel (16A) zum Berechnen von den die mindestens eine Trajektorie (T₁ bis T₆) beschreibenden Daten ((xo,yo), (x1,y1), (x2,y2), (x3,y3); M) in Abhängigkeit von der Stellung der vorderen Räder oder Laufwerke (2, 3) und/oder der hinteren Räder oder Laufwerke (4, 5) in einem auf das Fahrwerk (1) der Baumaschine bezogenen Koordinatensystem (x, y),
Mittel (16B) zum Umrechnen der die mindestens eine Trajektorie beschreibenden Daten in ein auf die Bildaufzeichnungseinheit (15) bezogenes Koordinatensystem (x',y'), in dem das Bild auf der Anzeigeeinheit (14) dargestellt wird, und
Mittel (16D) zum Korrigieren der die mindestens eine Trajektorie beschreibenden Daten in dem auf die Bildaufzeichnungseinheit (15) bezogenen Koordinatensystem (x',y') auf der Grundlage einer Korrekturfunktion, mit der eine Veränderung der Längsneigung und/oder Querneigung und/oder Höhe der Bildaufzeichnungseinheit (15) in Bezug auf das Fahrwerk (1) der Baumaschine bezogene Koordinatensystem (x,y) berücksichtigt wird.

2. Baumaschine nach Anspruch 1, **dadurch gekennzeichnet,**
**dass** die Bedieneinheit (12) Mittel (12B) zur Auswahl eines Lenkmodus aus einer Mehrzahl von Lenkmodi aufweist, wobei die Bedieneinheit (12) mit der Lenkeinrichtung (10) derart zusammenwirkt, dass die Lenkeinrichtung den ausgewählten Lenkmodus berücksichtigt, und dass die Bedieneinheit (12) Mittel (12A) zum Vorgeben eines Lenkwinkels für die vorderen Räder oder Laufwerke (2, 3) und/oder die hinteren Räder oder Laufwerke (4, 5) aufweist, wobei die Bedieneinheit (12) mit der Lenkeinrichtung (10) derart zusammenwirkt, dass die Lenkeinrichtung den vorgegebenen Lenkwinkel (a) einstellt, und
**dass** die Recheneinheit (16) Mittel (16A) zum Berechnen von den die mindestens eine Trajektorie (T₁ bis T₆) beschreibenden Daten ((xo,yo), (x1,y1), (x2,y2), (x3,y3); M) in Abhängigkeit von dem ausgewählten Lenkmodus aufweist.

3. Baumaschine nach Anspruch 1 oder 2, **dadurch gekennzeichnet, dass** die Recheneinheit (6) Mittel (16C) zum Korrigieren der die mindestens eine Trajektorie beschreibenden Daten in dem auf die Bildaufzeichnungseinheit (15) bezogenen Koordinatensystem (x',y') auf der Grundlage einer Korrekturfunktion aufweist, mit der eine Verzerrung des mit der Bildaufzeichnungseinheit aufgezeichneten Bildes berücksichtigt wird.

4. Baumaschine nach einem der Ansprüche 1 bis 3, **dadurch gekennzeichnet, dass** die Mittel (16A) zum Berechnen von die mindestens eine Trajektorie beschreibenden Daten derart ausgebildet sind, dass in dem auf die Baumaschine bezogenen Koordinatensystem (x, y) berechnet werden:
ein Startpunkt, der auf einem Referenzpunkt (x0, y0) in Bezug auf die Baumaschine liegt,
ein Endpunkt, der an dem Punkt (x1, y1; x2, y2; x3, y3) liegt, an dem sich der Referenzpunkt bei dem ausgewählten Lenkmodus und dem vorgegebenen Lenkwinkel (α) nach dem Zurücksetzen der Baumaschine um eine vorgegebene Wegstrecke (l₁, l₂, l₃) befindet und
der Radius (r) oder Mittelpunkt (M) eines Kreisbogens zwischen dem Startpunkt und dem Endpunkt.

5. Baumaschine nach Anspruch 4, **dadurch gekennzeichnet, dass** die vorgegebene Wegstrecke (l₁, l₂, l₃), um den die Baumaschine zurückgesetzt werden soll, die Fahrzeuglänge (l₁) oder ein Teil (l₂, l₃) der Fahrzeuglänge der Baumaschine ist.

6. Baumaschine nach Anspruch 4 oder 5, **dadurch gekennzeichnet, dass** die Mittel (16A) zum Berechnen mindestens einer Trajektorie derart ausgebildet sind, dass der Endpunkt einer ersten Trajektorie (T₁ bis T₃) berechnet wird, deren Startpunkt an der einen Längsseite, vorzugsweise an dem in Arbeitsrichtung hinteren linken Punkt der Baumaschine, liegt, und der Endpunkt einer zweiten Trajektorie (T₄ bis T₆) berechnet wird, deren Startpunkt an der anderen Längsseite, vorzugsweise an dem in Arbeitsrichtung hinteren rechten Punkt der Baumaschine, liegt.

7. Baumaschine nach einem der Ansprüche 1 bis 6, **dadurch gekennzeichnet, dass** die Bedieneinheit (12) derart mit der Lenkeinrichtung (10) zusammenwirkt, dass die Lenkeinrichtung (10) den Lenkwinkel (α₁, α₂) des vorderen rechten und linken Rads oder Laufwerks (2, 3) und den Lenkwinkel (α₃, α₄) des hinteren rechten und linken Rads oder Laufwerks (4, 5) derart einstellt, wobei für einen ersten Lenkmodus die vorderen und hinteren Räder oder Laufwerke in die gleiche Richtung gedreht werden.

8. Baumaschine nach einem der Ansprüche 1 bis 7, **dadurch gekennzeichnet, dass** die Bedieneinheit (12) derart mit der Lenkeinrichtung (10) zusammenwirkt, dass die ' Lenkeinrichtung (10) den Lenkwinkel (α₁, α₂) des vorderen rechten und linken Rads oder Laufwerks (2, 3) und den Lenkwinkel (α₃, α₄) des hinteren rechten und linken Rads oder Laufwerks (4, 5) derart einstellt, wobei für einen ersten Lenkmodus die vorderen und hinteren Räder oder Laufwerke in entgegengesetzte Richtungen gedreht werden.

9. Baumaschine nach einem der Ansprüche 1 bis 8, **dadurch gekennzeichnet, dass** die Lenkeinrichtung (10) derart ausgebildet ist, dass sich die Verlängerungen (L₁, L₂, L₃, L₄) der Achsen der Räder oder Laufwerke (2, 3; 4, 5) in einem Kurvenmittelpunkt (M) schneiden.

## Claims

1. Self-propelled civil engineering machine comprising
a running gear (1) which has wheels or other running-gear units (2, 3) which are at the front in the direction of working and wheels or other running-gear units (4, 5) which are at the rear in the direction of working,
a chassis (6) of the machine which is carried by the running gear,
a drive arrangement (9) for driving the front wheels or other running-gear units and/or the rear wheels or other running-gear units (2, 3; 4, 5),
a steering arrangement (10) for steering the front wheels or other running-gear units (3, 4) and/or the rear wheels or other running-gear units (4, 5), and
a unit (12) having controls,
the chassis (6) of the machine being designed to be adjustable in the heightwise direction and/or in inclination,
**characterised in that**
the civil engineering machine has an arrangement (13) for assisting the driver of the machine when reversing, the arrangement for assisting the driver of the machine when reversing comprising:
a unit (17) for sensing the position of the front wheels or other running-gear units (2, 3) and/or rear wheels or other running-gear units (4, 5),
a calculating unit (16) for determining data ((x0, y0), (x1, y1), (x2, y2), (x3, y3), M, r) which defines at least one trajectory (T₁ to T₆) of the civil engineering machine as a function of the position of the front wheels or other running-gear units (2, 3) and/or the rear wheels or other running-gear units (4, 5),
an image detecting unit (15) for detecting an image of the rear part of the civil engineering machine,
a display unit (14) for displaying the detected image of the rear part of the civil engineering machine, and
an image processing unit (18) which is so designed that the at least one trajectory (T₁ to T₆) is superimposed on the image of the rear part of the civil engineering machine which is displayed on the display unit,
the calculating unit (6) comprising:
means (16A) for calculating data ((x0, y0), (x1, y1), (x2, y2), (x3, y3), M) defining the at least one trajectory (T₁ to T₆), as a function of the position of the front wheels or other running-gear units (2, 3) and/or the rear wheels or other running-gear units (4, 5) in a co-ordinate system (x, y) referred to the running gear (1) of the civil engineering machine,
means (16B) for converting the data defining the at least one trajectory to be in a co-ordinate system (x', y') referred to the image detecting unit (15) in which the image is displayed on the display unit (14), and
means (16D) for correcting the data defining the at least one trajectory in the co-ordinate system (x', y') referred to the image detecting unit (15), on the basis of a correcting function by which allowance is made for a change in the longitudinal inclination and/or transverse inclination and/or height of the image detecting unit (15) relative to the co-ordinate system (x, y) referred to the running gear (1) of the civil engineering machine.

2. Civil engineering machine according to claim 1, **characterised in that** the unit (12) having the controls comprises means (12B) for selecting one mode of steering from a plurality of modes of steering, the unit (12) having the controls co-operating with the steering arrangement (10) in such a way that the steering arrangement makes allowance for the selected mode of steering, and **in that** the unit (12) having the controls comprises means (12A) for stipulating a steering angle for the front wheels or other running-- gear units (2, 3) and/or rear wheels or other running-gear units (4, 5), the unit (12) having the controls co-operating with the steering arrangement (10) in such a way that the steering arrangement sets the stipulated steering angle (a), and
**in that** the calculating unit (16) comprises means (16A) for calculating data ((x0, y0), (x1, y1), (x2, y2), (x3, y3), M) defining the at least one trajectory (T₁ to T₆), as a function of the selected mode of steering.

3. Civil engineering machine according to claim 1 or 2, **characterised in that** the calculating unit (6) comprises means (16C) for correcting the data defining the at least one trajectory in the co-ordinate system (x', y') referred to the image detecting unit (15), on the basis of a correcting function by which allowance is made for distortion of the image detected by the image detecting unit.

4. Civil engineering machine according to one of claims 1 to 3, **characterised in that** the means (16A) for calculating data defining the at least one trajectory are so designed that there are calculated, in the co-ordinate system (x, y) referred to the civil engineering machine:
a starting point which is situated at a reference point (x0, y0) related to the civil engineering machine,
an end point which is situated at that point (x1, y1; x2, y2; x3, y3) at which the reference point is situated, in the selected mode of steering and with the stipulated steering angle (a), after the movement back of the civil engineering machine for a stipulated distance of travel (l₁, l₂, l₃), and
the radius (r) or centre (M) of an arc of a circle extending between the starting point and the end point.

5. Civil engineering machine according to claim 4, **characterised in that** the stipulated distance of travel (l₁, l₂, l₃) by which the civil engineering machine is to be moved back is the length (l₁), or part (l₂, l₃) of the length, of the civil engineering machine.

6. Civil engineering machine according to claim 4 or 5, **characterised in that** the means (16A) for calculating at least one trajectory are so designed that the end point of a first trajectory (T₁ to T₃) whose starting point is situated on one longitudinal side of the civil engineering machine, and preferably at the left-hand point thereof at the rear in the direction of working, is calculated, and the end point of a second trajectory (T₄ to T₆) whose starting point is situated on the other longitudinal side of the civil engineering machine, and preferably at the right-hand point thereof at the rear in the direction of working, is calculated.

7. Civil engineering machine according to one of claims 1 to 6, **characterised in that** the unit (12) having the controls co-operates with the steering arrangement (10) in such a way that the steering arrangement (10) sets the steering angles (α₁, α₂) of the front right-hand and left-hand wheels or other running-gear units (2, 3) and the steering angles (α3, α4) of the rear right-hand and left-hand wheels or other running-gear units (4, 5) in such a way the front and rear wheels or other running-gear units being turned in the same direction in a first mode of steering.

8. Civil engineering machine according to one of claims 1 to 7, **characterised in that** the unit (12) having the controls co-operates with the steering arrangement (10) in such a way that the steering arrangement (10) sets the steering angles (α₁, α₂) of the front right-hand and left-hand wheels or other running-gear units (2, 3) and the steering angles (α3, α4) of the rear right-hand and left-hand wheels or other running-gear units (4, 5) in such a way the front and rear wheels or other running-gear units being turned in opposite directions in a first mode of steering.

9. Civil engineering machine according to one of claims 1 to 8, **characterised in that** the steering arrangement (10) is so designed that the extensions (L₁, L₂, L₃, L₄) of the axes of the wheels or other running-gear units (2, 3; 4, 5) intersect at a centre of (M) of a turning circle.

## Revendications

1. Engin automobile avec
un châssis (1) qui présente dans la direction de travail des roues ou mécanismes de roulement avant (2, 3) et des roues ou mécanismes de roulement arrière (4, 5),
un bâti de machine (6) qui est porté par le châssis,
un dispositif d'entraînement (9) pour l'entraînement des roues ou mécanismes de roulement avant et/ou des roues ou mécanismes de roulement arrière (2, 3; 4, 5),
un dispositif de guidage (10) pour le guidage des roues ou mécanismes de roulement avant (3, 4) et/ou des roues ou mécanismes de roulement arrière (4, 5) et
une unité de commande (12),
dans lequel le bâti de machine (6) est réalisé de manière réglable en hauteur et/ou en inclinaison,
**caractérisé en ce que**
l'engin présente un dispositif (13) pour le soutien de l'opérateur de l'engin lors du déplacement arrière, dans lequel le dispositif pour le soutien de l'opérateur d'engin lors du déplacement vers l'arrière présente :
une unité (17) pour la détection de la position des roues ou mécanismes de roulement avant (2, 3) et/ou des roues ou mécanismes de roulement arrière (4, 5),
une unité de calcul (16) pour la détermination de données ((xo, yo), (x1, y1), (x2, y2), (x3, y3) ; M, r) qui décrivent au moins une trajectoire (T₁ à T₆) de l'engin en fonction de la position des roues ou mécanismes de roulement avant (2, 3) et/ou des roues ou mécanismes de roulement arrière (4, 5),
une unité de prise d'image (15) pour la prise d'une image de la zone arrière de l'engin,
une unité d'affichage (14) pour la représentation de l'image prise de la zone arrière de l'engin et
une unité de traitement d'image (18) qui est réalisée de telle manière que l'au moins une trajectoire (T₁ à T₆) est superposée à l'image de la zone arrière de l'engin affichée sur l'unité d'affichage,
dans lequel l'unité de calcul (6) présente :
des moyens (16A) pour calculer les données ((xo, yo), (x1, y1), (x2, y2), (x3, y3) ; M) décrivant l'au moins une trajectoire (T₁ à T₆) en fonction de la position des roues ou mécanismes de roulement avant (2, 3) et/ou des roues ou mécanismes de roulement arrière (4, 5) dans un système de coordonnées (x, y) lié au châssis (1) de l'engin,
des moyens (16B) pour recalculer les données décrivant l'au moins une trajectoire dans un système de coordonnées (x', y') lié à l'unité de prise d'image (15) dans lequel l'image est représentée sur l'unité d'affichage (14), et
des moyens (16D) pour corriger les données décrivant l'au moins une trajectoire dans le système de coordonnées (x', y') lié à l'unité de prise d'image (15) sur la base d'une fonction de correction, avec laquelle une modification de l'inclinaison longitudinale et/ou l'inclinaison transversale et/ou la hauteur de l'unité de prise d'image (15) est prise en considération par rapport au système de coordonnées (x, y) lié au châssis (1) de l'engin.

2. Engin selon la revendication 1, **caractérisé en ce que**
l'unité de commande (12) présente des moyens (12B) pour la sélection d'un mode de guidage à partir d'une pluralité de modes de guidage, dans lequel l'unité de commande (12) coopère avec le dispositif de guidage (10) de telle manière que le dispositif de guidage prend en considération le mode de guidage sélectionné, et que l'unité de commande (12) présente des moyens (12A) pour prédéfinir un angle de guidage pour les roues ou mécanismes de roulement avant (2, 3) et/ou les roues ou mécanismes de roulement arrière (4, 5), dans lequel l'unité de commande (12) coopère avec le dispositif de guidage (10) de telle manière que le dispositif de guidage règle l'angle de guidage prédéfini (a), et
l'unité de calcul (16) présente des moyens (16A) pour calculer les données ((xo, yo), (x1, y1), (x2, y2), (x3, y3); M) décrivant l'au moins une trajectoire (T₁ à T₆) en fonction du mode de guidage sélectionné.

3. Engin selon la revendication 1 ou 2, **caractérisé en ce que** l'unité de calcul (6) présente des moyens (16C) pour corriger les données décrivant l'au moins une trajectoire dans le système de coordonnées (x', y') lié à l'unité de prise d'image (15) sur la base d'une fonction de correction avec laquelle une distorsion de l'image prise avec l'unité de prise d'image est prise en considération.

4. Engin selon l'une quelconque des revendications 1 à 3, **caractérisé en ce que** les moyens (16A) pour calculer les données décrivant l'au moins une trajectoire sont réalisés de telle manière que dans le système de coordonnées (x, y) lié à l'engin sont calculés :
un point de démarrage qui se trouve sur un point de référence (x0, y0) par rapport à l'engin,
un point final qui se trouve sur le point (x1, y1; x2, y2 ; x3, y3) sur lequel le point de référence se trouve pour le mode de guidage sélectionné et l'angle de guidage prédéfini (a) après le recul de l'engin d'une distance (l₁, l₂, l₃) prédéfinie et
le rayon (r) ou point central (M) d'un arc de cercle entre le point de démarrage et le point terminal.

5. Engin selon la revendication 4, **caractérisé en ce que** la distance (l₁, l₂, l₃) prédéfinie de laquelle l'engin doit être reculé est la longueur de véhicule (l₁) ou une partie (l₂, l₃) de la longueur de véhicule de l'engin.

6. Engin selon la revendication 4 ou 5, **caractérisé en ce que** les moyens (16A) pour calculer au moins une trajectoire sont réalisés de telle manière que le point final d'une première trajectoire (T₁ à T₃) est calculé, dont le point de démarrage se trouve sur l'un côté longitudinal, de préférence sur le point gauche arrière dans la direction de travail de l'engin, et le point final d'une seconde trajectoire (T₄ à T₆) est calculé, dont le point de démarrage se trouve sur l'autre côté longitudinal, de préférence sur le point droit arrière dans la direction de travail de l'engin.

7. Engin selon l'une quelconque des revendications 1 à 6, **caractérisé en ce que** l'unité de commande (12) coopère avec le dispositif de guidage (10) de telle manière que le dispositif de guidage (10) règle l'angle de guidage (α₁, α₂) de la roue ou mécanisme de roulement droite et gauche avant (2, 3) et l'angle de guidage (α₃, α₄) de la roue ou mécanisme de roulement droite et gauche arrière (4, 5) de la sorte, dans lequel pour un premier mode de guidage les roues ou mécanismes de roulement avant et arrière sont tournées dans la même direction.

8. Engin selon l'une quelconque des revendications 1 à 7, **caractérisé en ce que** l'unité de commande (12) coopère avec le dispositif de guidage (10) de telle manière que le dispositif de guidage (10) règle l'angle de guidage (α₁, α₂) de la roue ou mécanisme de roulement droite et gauche avant (2, 3) et l'angle de guidage (α₃, α₄) de la roue ou mécanisme de roulement droite et gauche arrière (4, 5) de la sorte, dans lequel pour un premier mode de guidage les roues ou mécanismes de roulement avant et arrière sont tournées dans des directions opposées.

9. Engin selon l'une quelconque des revendications 1 à 8, **caractérisé en ce que** le dispositif de guidage (10) est réalisé de telle manière que les prolongements (L₁, L₂, L₃, L₄) des essieux des roues ou mécanismes de roulement (2, 3 ; 4, 5) se coupent dans un point central courbé (M).
